# EUROPÄISCHE PATENTANMELDUNG

(11) **EP 1 632 138 A1**
(43) Veröffentlichungstag der Anmeldung: **08.03.2006**
(21) Anmeldenummer: 05018505.7
(22) Anmeldetag: 25.08.2005
(51) Int. Cl.: A23L 1/308, A23L 1/0526, A21D 2/18

(54) **Verfahren zur Herstellung eines lösliche Ballaststoffe enthaltenden Erzeugnisses aus Getreidemahlprodukten**

(30) Priorität: 25.08.2004 DE 102004041285
(71) Anmelder: Kotthoff, Gudrun, 50858 Köln (DE)
(72) Erfinder: Kutthoff, Gudrun, 50858 Köln (DE); Schlechtrimen, Engelbert, 51103 Köln (DE)
(74) Vertreter: Müller-Gerbes Wagner Albiger Patentanwälte

(57) **Zusammenfassung**

Die Erfindung betrifft ein Verfahren zur Herstellung eines Erzeugnisses aus Getreidemahlprodukten, das auf einer Teigmasse basiert, die vor dem Verzehr gekocht, gebraten und/oder gebacken wird, wobei der Teigmasse vor dem Kochen, Braten und/oder Backen 20 bis 100 Gramm eines löslicher hydrolysierten Ballaststoffes bezogen auf ein Kilogramm Teigmasse zugemischt wird.

## Beschreibung

Die Erfindung betrifft ein Verfahren zur Herstellung eines Erzeugnisses aus Getreidemahlprodukten, das auf einer Teigmasse basiert, die vor dem Verzehr gekocht, gebraten und/oder gebacken wird, wobei die Teigmasse lösliche Ballaststoffe enthält.

Durch lösliche Ballaststoffe in einem Nahrungsmittel lässt sich der Anstieg des Blutzuckerspiegels nach dem Verzehr des besagten Nahrungsmittels beeinflussen. Durch die quellende und andickende Wirkung löslicher Ballaststoffe wird die Resorption der im Nahrungsmittel enthaltenen Kohlenhydrate in dem Magen-Darm-Trakt verzögert, so dass der Blutzuckerspiegel nur gering ansteigt. In diesem Fall wird vergleichsweise weniger Insulin ausgeschüttet. Es stellt sich ein lang anhaltendes Sättigungsgefühl ein. Die Gefahr einer Unterzuckerung und ein damit einhergehender Heißhunger aufgrund einer hohen Insulinausschüttung kann deutlich reduziert werden.

Zur Beschreibung der glykämischen Reaktion des Körpers nach dem Essen wird der sogenannte glykämische Index verwendet. Durch diesen Index ist es möglich, Nahrungsmittel hinsichtlich ihres Einflusses auf den Blutzuckerspiegel untereinander vergleichen zu können. Auch wenn der Einfluss eines Nahrungsmittels auf den Blutzuckerspiegel von vielen Faktoren wie die Zubereitungsform des Nahrungsmittels, der Kauintensität, dem Umfang der Mahlzeit, dem Biorhythmus der Magenentleerung etc. abhängt, kann der glykämische Index zumindest qualitativ Auskunft geben, ob ein Nahrungsmittel den Blutzuckerspiegel eher schnell oder eher langsam ansteigen lässt.

Der glykämische Index eines Nahrungsmittels gibt das Verhältnis der Fläche unter einer Blutzuckerkurve, die sich nach dem Essen des Nahrungsmittels ergibt, zu einer Fläche unter einer Blutzuckerkurve an, die sich nach der Einnahme von Glukose oder Traubenzucker einstellt. Ein hoher glykämischer Index von beispielsweise 100 % steht für einen raschen Anstieg des Blutzuckerspiegels, da in diesem Fall das Nahrungsmittel so schnell wie Glukose oder Traubenzucker vom Magen-Darm-Trakt aufgenommen wird. Ist der glykämische Index gering, beispielsweise 40 %, verursacht die Einnahme des betreffenden Nahrungsmittels nur einen geringen Anstieg des Blutzuckerspiegels. Aufgrund ihres Einflusses auf die Resorption von Nährstoffen lässt sich daher durch lösliche Ballaststoffe der glykämische Index eines Nahrungsmittels reduzieren.

Die Reduktion des glykämischen Index beziehungsweise die Verhinderung des raschen Anstiegs des Blutzuckerspiegels wird allgemein auf die quellende Wirkung des löslichen Ballaststoffes zurückgeführt. Zum einen erhöht sich die Viskosität des mit dem Ballaststoff angereicherten Nahrungsbreis, wodurch es schneller zur Sättigung kommt. Zum anderen wird durch das Andicken des Mageninhalts die Magenentleerung verzögert. Darüber hinaus kleidet der quellende Ballaststoff den Darm aus und verdickt so die Schicht zwischen den Nährstoffen und den die Nährstoffen resorbierenden Mukosazellen. Dadurch kommt es zu einer verzögerten Resorption der Kohlenhydrate mit der Folge, dass der Blutzuckerspiegel nicht stark ansteigt. Jedoch kann ein zu hoher Anteil löslicher Ballaststoffe in Nahrungsmitteln aufgrund seiner quellenden Wirkung zu Verdauungsproblemen wie Blähungen führen.

Lösliche Ballaststoffe quellen jedoch nicht nur im Magen-Darm-Trakt, sondern binden Wasser auch schon bei der Zubereitung des Nahrungsmittels. Diese andickende oder quellende Wirkung wird bei der Zubereitung von Nahrungsmitteln genutzt. Beispielsweise wird die Viskosität eines Teiges durch die Zumischung von löslichen Ballaststoffen in kleinen Mengen (2 bis 5 Gramm auf ein Kilogramm Teigmasse) zur Gewährleistung einer gleich bleibenden Qualität eingestellt.

Der Anteil der löslichen Ballaststoffe hängt daher von der gewünschten Viskosität des Nahrungsmittels ab und kann deshalb nicht beliebig verändert werden, ohne dessen Konsistenz merklich zu verändern. Lösliche Ballaststoffe eignen sich daher grundsätzlich nicht, ein Nahrungsmittel zu verändern, um den zugehörigen glykämischen Index deutlich zu reduzieren, wenn hinsichtlich der Viskosität des Nahrungsmittels enge Grenzen einzuhalten sind und Wasser oder eine andere Flüssigkeit nicht beliebig zugemischt werden kann.

Erzeugnisse, die auf Weißmehl basieren, wie Weißbrot, Baguette, Toastbrot, Brötchen, Pizza, Kuchen oder Hamburger weisen wenig Ballaststoffe auf. Jedoch sind derartige Produkte insbesondere im Convenience-Food-Bereich sehr beliebt und lassen sich durch ballaststoffreichere Vollkornprodukte kaum ersetzen. Alternativ zum Einsatz von Vollkornprodukten könnten lösliche Ballaststoffen eingesetzt werden, die aber aufgrund der quellenden Wirkung einen höheren Wasseranteil im Teig bedingen. Durch den höheren Wasseranteil reduziert sich die Fähigkeit der Teigmasse, beim Backen ein großes Volumen auszubilden (Gashaltefähigkeit). Als Folge davon sind die gebackenen Produkte in Konsistenz und Geschmack verändert. Darüber hinaus ist eine Volumenverringerung bezogen auf die eingesetzte Teigmasse zu beobachten. Da Weißmehlprodukte in der Regel über Größe und Stück verkauft werden (zum Beispiel Brötchen), würde der Verbraucher das geringere Volumen als Preiserhöhung empfinden und abweisend gegenüberstehen. Ebenso wäre eine sensorische Akzeptanz stark in Frage gestellt.

Der Erfindung liegt daher die Aufgabe zu Grunde, ein Verfahren zur Herstellung eines Erzeugnisses aus Getreidemahlprodukten bereitzustellen, so dass der glykämische Index des Erzeugnisses reduziert wird beziehungsweise der durch den Verzehr einhergehende Anstieg des Blutzuckerspiegels gemindert wird, ohne dabei zu großen Einfluss auf die gewöhnliche Zubereitung des Erzeugnisses und dessen Konsistenz und Eigenschaften zu nehmen.

Die Aufgabe wird dadurch gelöst, dass der Teigmasse ein hydrolysierter löslicher Ballaststoff vor dem Kochen, Braten und/oder Backen zugemischt wird, wobei 20 bis 100 Gramm des hydrolysierten löslichen Ballaststoffes bezogen auf ein Kilogramm Teigmasse zugemischt werden. Unter Erzeugnisse aus Getreidemahlprodukten sollen insbesondere Backwaren wie Brote, Kuchen, Bäckerei- und Konditoreiprodukte, Brötchen, Toastbrot, Baguette, Pizza und Teigwaren wie Pasta, Nudeln etc. fallen.

Durch die Hydrolysierung des löslichen Ballaststoffes wird die andickende oder quellende Wirkung des Ballaststoffes stark reduziert beziehungsweise vollständig eliminiert, so dass eine Beimischung von hydrolysiertem löslichen Ballaststoff im wesentlichen keinen Einfluss auf die Konsistenz des Nahrungsmittels hat. Dies bedeutet, dass trotz eines geänderten Anteils von Ballaststoffen in einem Nahrungsmittel dessen herkömmliche Zubereitung und dessen gewohnter Verzehr keiner besonderen Anpassung bedarf, beispielsweise durch die Beigabe von zusätzlichem Wasser. Somit kann hydrolysierter löslicher Ballaststoff entsprechend der Vorgabe, den glykämischen Index zu reduzieren, einer Teigmasse zugemischt werden, ohne das bereits bewährte Rezept für die Teigmasse zu ändern.

Aufgrund der nun deutlich reduzierten beziehungsweise eliminierten Quellwirkung lässt sich die Verzögerung der Resorption von Nährstoffen nicht mehr mit der Verzögerung der Magenentleerung oder mit der Auskleidung des Darms durch den aufquellenden Ballaststoffes erklären. Überraschenderweise hat sich aber herausgestellt, dass nach dem Essen beispielsweise eines Brotes, dessen Teig mit einem hydrolysierten löslichen Ballaststoff angereichert wurde, sich ein vergleichsweise lang anhaltendes Sättigungsgefühl eingestellt hat, was für eine geringe Insulinausschüttung spricht, die ein Hinweis auf einen niedrigen glykämischen Index beziehungsweise auf eine verzögerte Resorption von Nährstoffen ist.

Zudem können hydrolysierte lösliche Ballaststoffe verwendet werden, Nahrungsmittel mit Ballaststoffen anzureichen, ohne, wie oben beschrieben, deren Konsistenz etc. zu verändern. Dies eröffnet die Möglichkeit, gängige Produkte beispielsweise wie Hamburger nahezu unverändert, aber nun mit Ballaststoffen angereichert, anzubieten.

Durch das Zumischen des hydrolysierten löslichen Ballaststoffes verringert sich das Gashaltevermögen des Teiges in vergleichsweise engen Grenzen. So können Weißmehlprodukte wie Toastbrot, Brötchen, Hamburger, Baguette mit Ballaststoffen angereichert werden, ohne dass sie an Geschmack und, bezogen auf die eingesetzte Teigmasse, wesentlich an Volumen verlieren.

Auch hat sich gezeigt, dass durch das Zumischen von hydrolysierten löslichen Ballaststoffen in Teigen für Brote oder allgemein für Backwaren die Eigenschaften der Krume, also des inneren, meist locker-voluminösen Anteils der Backware, nicht negativ beeinflusst werden. So sind Struktur und Elastizität der Krume einer Backware mit hydrolysierten löslichen Ballaststoffen ähnlich oder gar identisch zu einer Backware, die nach gleichem Rezept, aber ohne die hydrolysierten löslichen Ballaststoffe hergestellt wurde. Somit kann ein hydrolysierter löslicher Ballaststoff in Backwaren verwendet werden, den glykämischen Index zu reduzieren, ohne die Eigenschaften des Inneren der Backware wie Elastizität und Struktur zu verändern.

Ein weiterer überraschender Effekt des Zumischens von teilhydrolysierten Ballaststoff in den erfindungsgemäßen Mengen bei Backwaren besteht darin, dass sich die Backware lange frisch hält. Ein Austrocknen der Krume lässt sich durch geeignete Verwahrung mehrere Tage sicher vermeiden, so dass auch nach einer Woche die Backware frisch wirkt.

Erfindungsgemäß sollen 20 bis 100 Gramm bezogen auf ein Kilogramm Teigmasse zugemischt werden, wobei bei einer Zumischung von 100 Gramm pro Kilogramm das Nahrungsmittel sehr sättigend ist und beim Verzehr des Erzeugnisses aus Getreidemahlprodukten es zu Unverträglichkeiten kommen kann, insbesondere dann, wenn das Nahrungsmittel in großen Mengen konsumiert wird, an die der Verbraucher aufgrund des geringen Ballaststoffanteils des nicht ballaststoffangereicherten Produktes gewöhnt ist. Bevorzugt werden daher 20 bis 60 Gramm, vorzugsweise 25 bis 60 Gramm pro Kilogramm Teigmasse eingesetzt, was einem prozentualen Gewichtsanteil von 2 bis 6 % bzw. 2,5 bis 6 % entspricht.

Ein anderer bevorzugter Bereich reicht von 30 bis 80 Gramm pro Kilogramm Teigmasse. Zweckmäßig werden 30 bis 50, vorzugsweise 35 bis 50 Gramm pro Kilogramm Teigmasse zugemischt. Die Bereiche für die oben beschriebenen Gewichtsanteile tragen dazu bei, der Empfehlung der Deutschen Gesellschaft für Ernährung, 30 Gramm Ballaststoffe täglich zu sich zu nehmen, Folge zu leisten.

Vorzugsweise enthält der hydrolysierte lösliche Ballaststoff Galaktomannan, wie dies beispielsweise bei Guar (Guarkernmehl) oder Johannesbrotkernmehl der Fall ist. Da es hauptsächlich aus Galaktomannan besteht, einer Substanz, die ― ähnlich wie Stärke ― aus langen Ketten von Zuckerbausteinen mit Seitenzweigen aufgebaut ist, kann teilhydrolysiertes Guarkernmehl als hydrolysierter löslicher Ballaststoff bevorzugt verwendet werden. An dieser Stelle sei angemerkt, dass der Begriff der hydrolysierten Ballaststoffe auch teilhydrolysierte Ballaststoffe einschließen soll. Insbesondere bei Nahrungsmitteln, die Stärke enthalten, kommt es beim Einsatz von Galaktomannan zu einer verzögerten Resorption von Kohlenhydraten beziehungsweise zu einer Verzögerung der Aufspaltung von Stärke.

Ein weiterer Vorteil von teilhydrolysiertem Guar besteht darin, dass es geschmacksneutral ist. Somit können bekannte Rezepturen für Nahrungsmittel weiter verwendet und der Anteil des Guarkernmehls (Guar) hinsichtlich der Auswirkungen auf den Gesamtgeschmack beliebig gewählt werden.

Teilhydrolysiertes Guarkernmehl dient zudem bekanntermaßen als Nährstoff von nützlichen Darmbakterien, um diese zur weiteren Vermehrung anzuregen. Dadurch wird die Darmflora positiv beeinflusst, der Wasserhaushalt im Darm reguliert und die Stuhlkonsistenz gelockert. Zusätzlich wird der Darm angeregt, den Stuhl zügig weiter zu transportieren, wodurch es zu einer schnelleren Entleerung kommt.

Das Erzeugnis aus Getreidemahlprodukten kann aus einer Mischung mehrerer Einzelkomponenten bestehen, wie dies beispielsweise bei Brotteig der Fall ist. Vorzugsweise ist das Nahrungsmittel mit den oben beschriebenen Gewichtsanteilen eine Backware (zum Beispiel Brot, Brötchen, Feingebäck, Kuchen), es kann aber auch eine Teigware wie zum Beispiel Pasta, Nudeln, Lasagne etc. sein. Der lösliche Ballaststoff kann in Form eines Pulvers oder Mehls der Teigmasse zugemischt werden. Dadurch ist eine besonders gute Durchmischung von dem hydrolysierten löslichen Ballaststoff und den Kohlenhydraten in der Teigmasse möglich.

Vorzugweise wird bei der Herstellung der Teigmasse ein Weißmehl verwendet. Das Weißmehl weist im Vergleich zu einem Vollkornmehl nur eine sehr geringe Menge an Ballaststoffen auf, so dass durch das erfindungsgemäße Verfahren auch die ballastarmen Weißmehl-Produkte hohe Mengen an Ballaststoffen enthalten können, ohne deren spezifischen Eigenschaften zu beeinflussen.

In einem bevorzugten Ausführungsbeispiel wird eine zu backende Teigmasse mit einem Brandteig vermischt, um die Frischhaltung zu verbessern. Zur Herstellung des Brandteigs werden Wasser und Butter in einem Kessel aufgesetzt. In die kochende Flüssigkeit wird Mehl, vorzugsweise Weizenmehl (insbesondere dann, wenn die Teigmasse im Wesentlichen aus Weizenmehl basiert) eingerührt. Der Teig wird bis zum Ablösen vom Kesselrand auf dem Feuer abgeröstet. Danach kann der Teig in einem geschlossenen Gefäß gekühlt und später mit der (Haupt-)Teigmasse vermischt werden.

Üblicherweise ist die Vorverquellung der Mehrbestandteile durch gesäuerte oder auch ungesäuerte (Hefe) Vorteige die Regel. Hier wird durch die Gärung ein Teil der Mehlbestandteile angegriffen und enzymatisch in die Grundbestandteile abgebaut. Bei dem Brandteig werden die Mehlbestandteile nicht abgebaut, sondern vorverkleistert. Eine geschmacklich neutrale Wasserbindung ohne die Nachteile des enzymatischen Abbaus kann festgestellt werden. Auch lassen sich durch den Brandteig in Zusammenwirkung mit dem hydrolysierten löslichen Ballaststoff gute Eigenschaften hinsichtlich Elastizität und Bissfestigkeit erreichen. Zudem hat der Brandteig keine negativen Auswirkungen auf Bräunungsverhalten und Volumenausbeute.

Alternativ oder zusätzlich zum Brandteig kann ein Sauerteig aus Vollkernmehl und Wasser der Teigmasse zugemischt werden. Der Sauteig dient dabei dazu, die Schimmelanfälligkeit der Backware niedrig zu halten bzw. zu reduzieren.

Im Folgenden wird beispielhaft in Tabelle 1 die Zusammensetzung eines Teiges zur Herstellung einer Backware, nämlich eines Roggenbrotes wiedergegeben, dass mit dem erfindungsgemäßen Verfahren hergestellt wird:

**Tabelle 1: Zutaten eines Roggenbrotes**

| | |
|---|---|
| Roggen-Vollkernmehl | 568,00 g |
| Wasser | 570,00 g |
| Salz | 12,50 g |
| Guarkernmehl | 2,84 g |
| Benefiber^{R} | 57,00 g |
| Buttermilchpulver | 11,36 g |
| Rapsöl | 11,36 g |
| Hefe | 68,00 g |

Der hydrolysierte lösliche Ballaststoff ist in dem Pulver "Benefiber^{R}" enthalten. "Benefiber^{R}" ist ein Produkt, das von der Novartis Consumer Health GmbH in Deutschland vertrieben wird. Das Pulver wird zur Unterstützung der gesunden Darmtätigkeit verwendet. In dem Pulver "Benefiber^{R}" sind 78 Gramm teilhydrolysiertes Guarkernmehl pro 100 Gramm Pulver enthalten. Somit werden für die Zubereitung des Brotes rund 45 g hydrolysierter löslicher Ballaststoff eingesetzt. Der Anteil von "Benefiber^{R}" kann entsprechend der Erfindung in diesem Brot auch höher oder niedriger gewählt werden.

Bei der Zutat "Guarkernmehl" in Tabelle 1 handelt sich um natürliches, nichthydrolysiertes Guarkernmehl. Aufgrund seiner andickenden Wirkung wird der Anteil dieses Guarkernmehls auf die gewünschte/erforderliche Teigviskosität abgestimmt. Ein Teil des Roggen-Vollkernmehls wird für die Herstellung eines Sauerteigs verwendet, der dann mit einem aus den übrigen Zutaten bestehenden Teig vermischt wird.

Die Zutaten für ein Toastbrot zeigt Tabelle 2. In Tabelle 2 sind nicht wie in Tabelle 1 die Gewichtsmengen, sondern die Gewichtsanteile der einzelnen Zutaten für den Teig des Brotes aufgelistet. Wie Tabelle 2 zu entnehmen ist, werden verschiedene Vorteige (Grundsauer, Brandteig und Hefe) eingesetzt. Der Anteil von _{"}Benefiber^{R}" beträgt 4,9 Gewichtsprozente, kann aber auch andere Werte, beispielsweise im Bereich zwischen 3,9 bis 5,9 Gewichtsprozente, annehmen.

**Tabelle 2: Zutaten für ein Toastbrot (Angaben bezogen auf das Gewicht des Toastbrotteigs)**

| | |
|---|---|
| Weizenmehl | 46,8 % |
| Wasser | 25,9 % |
| Zucker | 2,1 % |
| Salz | 1,1 % |
| Benefiber^{R} | 4,7 % |
| Sonstige | 2,1 % |
| Hefe | 0,5 % |
| Grundsauer | 4,2 % (Wasser und Roggenmehl) |
| Brandteig | 13,0 % (Wasser, Weizenmehl, Butter/Fettstoff) |

Der Grundsauerteig wird am Vortag angesetzt und wird aus Vollkornmehl hergestellt, das mit einem Anstellgut und einer Schüttflüssigkeit 15 Minuten langsam geknetet wird. Die Teigtemperatur wird auf 22°C eingestellt und mindestens 20 Stunden gehalten. Der Grundsauerteig wird zugedeckt gelagert.

Um den Brandteig herzustellen, wird Weizenmehl in eine kochende Flüssigkeit aus Wasser und Butter in einem Gefäß eingerührt. Der Gewichtsanteil des Weizenmehls beträgt dabei ungefähr die Hälfte von dem Gewichtsanteil des Wassers. Der aus Weizenmehl, Wasser und Butter entstehende Teig wird abgeröstet, bis sich dieser von der Wandung des Gefäßes ablöst. Danach wird der Brandteig kühl gestellt.

Zur Herstellung des Toastbrotteiges werden die Zutaten gemäß Tabelle 2 abgewogen und mit dem Grundsauerteig und dem Brandteig 2 Minuten vermischt und dann 8 Minuten schnell geknetet. Eine Temperatur von 23 bis 24°C soll für den Toastbrotteig nicht überschritten werden.

Nach einer Ruhephase von ca. 10 Minuten werden die Teigstücke abgewogen und rundgewirkt. Nach einer weiteren Ruhephase von ca. 20 Minuten kann die Aufarbeitung erfolgen (four pieces, Doppelstrangmethode o. ä.).

In einer Gärphase wird der Toastbrotteig ca. 1,5 bis 2 Stunden auf einer Temperatur von 26 bis 28°C gehalten. Die relative Luftfeuchte beträgt dabei vorzugsweise 85 %. Zur besseren Geschmacksbildung wird eine Kühlphase (ggf. auch als Gärunterbrechung) von ca. 5 Stunden bei 5°C empfohlen.

Letztlich wird der reife Toastbrotteig für 30 Minuten bei einer Temperatur 200 bis 210°C fallend gebacken. 5 Minuten vor Backzeitende werden die Form, in der sich der Teig befindet, gedreht.

## Patentansprüche

1. Verfahren zur Herstellung eines Erzeugnisses aus Getreidemahlprodukten, das auf einer Teigmasse basiert, die vor dem Verzehr gekocht, gebraten und/oder gebacken wird, **dadurch gekennzeichnet, dass** der Teigmasse vor dem Kochen, Braten und/oder Backen 20 bis 100 Gramm eines löslicher hydrolysierten Ballaststoffes bezogen auf ein Kilogramm Teigmasse zugemischt werden.

2. Verfahren nach Anspruch 1, **dadurch gekennzeichnet, dass** 20 bis 60 Gramm des löslichen hydrolysierten Ballaststoffes bezogen auf ein Kilogramm Teigmasse zugemischt werden.

3. Verfahren nach Anspruch 1 oder 2, **dadurch gekennzeichnet, dass** bezogen auf ein Kilogramm Teigmasse 30 bis 80, vorzugsweise 30 bis 50 Gramm des löslichen hydrolysierten Ballaststoffes zugemischt werden.

4. Verfahren nach einem der Ansprüche 1 bis 3, **dadurch gekennzeichnet, dass** der hydrolysierte lösliche Ballaststoff in Form eines Pulvers oder Mehls zugemischt wird.

5. Verfahren nach einem der Ansprüche 1 bis 4, **dadurch gekennzeichnet, dass** der lösliche hydrolysierte Ballaststoff Galaktomannan enthält.

6. Verfahren nach einem der Ansprüche 1 bis 5, **dadurch gekennzeichnet, dass** als löslicher hydrolysierter Ballaststoff Guarkernmehl verwendet wird.

7. Verfahren nach einem der Ansprüche 1 bis 6, **dadurch gekennzeichnet, dass** zur Herstellung der Teigmasse neben Wasser hauptsächlich Weißmehl verwendet wird.

8. Verfahren nach einem der Ansprüche 1 bis 7, **dadurch gekennzeichnet, dass** ein Brandteig vorzugsweise aus Weizenmehl, Wasser und Butter/Fettstoffe hergestellt wird und mit der Teigmasse vermischt wird.

9. Verfahren nach einem der Ansprüche 1 bis 8, **dadurch gekennzeichnet, dass** ein Sauerteig vorzugsweise aus Roggenmehl und Wasser hergestellt wird und mit der Teigmasse vermischt wird.

10. Erzeugnis aus Getreidemahlprodukten mit vorzugsweise fester Konsistenz, das nach einem Verfahren gemäß der Ansprüche 1 bis 9 hergestellt wird.
